# EUROPÄISCHE PATENTSCHRIFT

(11) **EP 1 031 773 B1**
(45) Veröffentlichungstag und Bekanntmachung des Hinweises auf die Patenterteilung: **22.03.2006**
(21) Anmeldenummer: 99123359.4
(22) Anmeldetag: 23.11.1999
(51) Int. Cl.: F16J 15/02

(54) **Flüssigkeitsdichtung**
Fluid seal
Joint d'étanchéité pour fluide

(30) Priorität: 23.02.1999 DE 19907748
(43) Veröffentlichungstag der Anmeldung: 30.08.2000
(73) Patentinhaber: ACO SEVERIN AHLMANN GMBH & CO. KG, 24755 Rendsburg (DE)
(72) Erfinder: Arm, Wolfgang, 24782 Rickert (DE); Blaschke, Markus, 24787 Fockbek (DE)
(74) Vertreter: Bohnenberger, Johannes

(56) Entgegenhaltungen:
- DE-A- 2 743 501
- DE-C- 4 427 603
- DE-U- 29 619 973
- US-A- 4 333 662
- US-A- 4 854 543

## Beschreibung

Die Erfindung betrifft ein Verfahren zum Herstellen einer Flüssigkeitsdichtung sowie ein ringartiges Dichtungselement zum flüssigkeitsdichten Anschluß einer Anschlußleitung an ein in einem Verfestigungsprozeß hergestellten Formteil, insbesondere aus Polymerbeton, welches zur Führung und/oder Aufnahme von Flüssigkeiten ausgebildet ist, insbesondere zum Anschluß an eine Entwässerungsrinne, einen Einlaufkasten oder dergleichen Entwässerungseinrichtung.

Es ist bekannt, Formteile zur Führung und/oder Aufnahme von Flüssigkeiten in einem Gießprozeß herzustellen. Besonders bewährt hat sich dabei die Verwendung von Polymerbeton. Derartige Formteile können eine Anschlußöffnung mit einem in sich geschlossenen umlaufenden Öffnungsrand aufweisen, um eine Anschlußleitung, insbesondere zum Ableiten von Flüssigkeit, anzuschließen. Um die Anschlußleitung gegen den Öffnungsrand abzudichten, ist es bekannt, direkt beim Gießvorgang einen O-Ring miteinzugießen, so daß der O-Ring etwa mit der Hälfte seiner Querschnittsfläche innenseitig von dem Öffnungsrand hervorragt. Wird eine hinsichtlich ihrer Außenabmessungen passende Anschlußleitung in die durch den O-Ring definierte Ringöffnung eingebracht, ergibt sich im wesentlichen aufgrund von elastischen Rückstellkräften des O-Rings ein flüssigkeitsdichter Sitz zwischen der Anschlußleitung und dem O-Ring.

Aus verschiedenen Gründen kann jedoch nicht gewährleistet werden, daß sich bei einer solchen Flüssigkeitsdichtung auch ein flüssigkeitsdichter Sitz zwischen dem O-Ring und dem Öffnungsrand einstellt. Zum einen kann das bei der Herstellung des Formteils verwendete Material, wie es beispielsweise bei Polymerbeton der Fall ist, feste Partikel enthalten, so daß nach dem Aushärten am Öffnungsrand zwischen dem Formteil und dem O-Ring Hohlräume entstehen, die unter Umständen einen Flüssigkeitsdurchtritt ermöglichen. Insbesondere bei höherem Flüssigkeitsdruck ist somit eine Dichtigkeit nicht sichergestellt. Ein weiterer Grund liegt darin, daß insbesondere Polymerbeton während des Verfestigungsprozesses ein Schrumpfverhalten zeigt, so daß die Öffnungsweite der Anschlussöffnung nach dem Aushärten anders ist als zu Beginn des Verfestigungsprozesses. Aufgrund von asymmetrischer Formgebung, der Prozessführung und/oder aufgrund von Inhomogenitäten der beteiligten Materialien kann es somit zu Verformungen am Öffnungsrand kommen. Dies kann dazu führen, daß der O-Ring in Umfangsrichtung abschnittsweise nur locker oder überhaupt nicht am Öffnungsrand des Formteils anliegt und daher die Dichtigkeit nicht sichergestellt ist. Im übrigen entspricht ein derartig geschrumpfter oder verformter Öffnungsrand in punkto Maßhaltigkeit nicht mehr einschlägigen Normen. Hier sei insbesondere auf die DIN 19534 T1 (Steckmuffe mit Dichtung) verwiesen. Als Folge hiervon kann auch die Dichtigkeit zwischen der Anschlussleitung und dem O-Ring und/oder dem O-Ring und dem Formteil gefährdet sein.

Die Druckschrift DE 44 27 603 C1 beschreibt eine Vorrichtung zur Abdichtung einer Durchführung von Rohrleitungen durch ein Formteil mittels einer Wasser abweisenden Dichtungskonstruktion. Dazu wird bei der Herstellung des Formteils an diesem ein Dichtungselement angeordnet, das einen Formteil-Dichtungsbereich aufweist, der nach der Fertigstellung des Formteils einen flüssigkeitsdichten Sitz zwischen Dichtungselement und Formteil gewährleistet. Dieses Dichtungselement ist dabei als eine Dichtungsmanschette mit einem in sich geschlossenen umlaufenden Dichtungsrand ausgebildet. Der Formteil-Dichtungsbereich weist dabei Verankerungsbereiche auf, die nach dem Fertigstellen des Formteils einer auf das Dichtungselement gerichteten Abzugskraft entgegenwirken und die feste und flüssigkeitsdichte Verankerung des Dichtungselementes im Formteil gewährleisten.

Die Druckschrift US 4 854 543 A beschreibt ebenfalls eine Dichtungsvorrichtung für eine Rohrdurchführung durch ein vorzugsweise aus Beton hergestelltes Formteil. Auch hier wird bei der Herstellung des Formteils ein Dichtungselement angeordnet, das einen Verankerungsbereich aufweist, der nach dem Fertigstellen des Formteils einen flüssigkeitsdichten Sitz des Dichtungselements im Formteil gewährleistet. Im Querschnitt betrachtet ist der Verankerungsbereich hier an einem Außenrandbereich des Dichtungselementes angeordnet und derart ausgebildet, dass eine auf das Dichtungselement gerichtete Abzugkraft in einer Gegenkraft im Verankerungsbereich resultiert.

Aufgabe der vorliegenden Erfindung ist es, ein Verfahren und eine Vorrichtung der eingangs genannten Art anzugeben, mit denen ein flüssigkeitsdichter Sitz zwischen dem Formteil und dem Dichtungselement herstellbar ist. Der flüssigkeitsdichte Sitz soll insbesondere bei Verwendung von Materialien für das Formteil gewährleistet sein, die während des Verfestigungsprozesses ein Schrumpfungsverhalten zeigen.

Die Aufgabe wird durch ein Verfahren mit den Merkmalen des Anspruchs 1 und durch ein Dichtungselement mit den Merkmalen des Anspruchs 8 gelöst. Weiterbildungen sind Gegenstand der jeweils abhängigen Ansprüche.

Gemäß einem Kerngedanken der vorliegenden Erfindung wird das ringartige Dichtungselement vor dem Aushärten des Öffnungsrandes des Formteils an dem Öffnungsrand angeordnet, insbesondere bei einem Gießvorgang mit eingegossen. Das Dichtungselement weist einen Anschlussleitungs-Dichtungsbereich auf zur Bildung eines flüssigkeitsdichten Sitzes zwischen dem Dichtungselement und der Anschlussleitung, wenn die Anschlussleitung in die durch das Dichtungselement definierte Ringöffnung eingebracht ist. Zudem weist das Dichtungselement zusätzlich einen sich quer zur Durchströmungsrichtung der Anschlussöffnung bzw. Ringöffnung erstreckenden Formteil-Dichtungsbereich auf, der an der Außenseite des Anschluss-Leitungsbereichs in Umfangsrichtung des Dichtungselements verläuft.

Verfahrensseitig wird der Formteil-Dichtungsbereich derart angeordnet, dass sich beim Aushörten des Formteils ein flüssigkeitsdichter Sitz zwischen dem Formteil und dem Formteil-Dichtungsbereich bildet. Dabei liegt der Formteil-Dichtungsbereich zumindest einseitig über den Bereich seiner Erstreckung quer zur Durchströmungsrichtung an dem Material des Formteils an. Somit wird eine großflächige Anlagefläche zwischen dem Dichtungselement und dem Material des Formteils gebildet. Kleinere Hohlräume zwischen dem Dichtungselement und dem Material des Formteils werden daher allseits umrandet und wirken sich nicht als Lecköffnung aus.

Weiterhin ist selbst bei Schrumpfung des Formteils während des Verfestigungsprozesses ein flüssigkeitsdichter Sitz zwischen dem Formteil und dem Dichtungselement herstellbar, da aufgrund der Erstreckung des Formteil-Dichtungsbereichs quer zur Durchströmungsrichtung der Ringöffnung eine Anlage des Formteil-Materials an dem Dichtungselement sichergestellt ist. Dies gilt selbst dann, wenn sich in Folge ungleichmäßiger Schrumpfungskräfte die Form des Dichtungselements verändern sollte, beispielsweise ein Dichtungselement mit kreisförmigem Öffnungsquerschnitt zu einem Dichtungselement mit leicht ovalem Öffnungsquerschnitt verformt werden sollte.

Der zumindest eine Formteil-Dichtungsbereich erstreckt sich ungefähr senkrecht zur Durchströmungsrichtung der Ringöffnung. Während der Schrumpfung beim Verfestigungsprozess ist in diesem Fall die Verformung des Dichtungselements gering. Da außerdern ein Formteil-Dichtungsbereich entlang seiner Erstreckung quer zur Durchströmungsrichtung beiderseitig von Material des Formteils umgeben ist, bewirkt die Schrumpfung ein Anpressen des Formteil-Materials an das Dichtungselement.

Zudem ist der Formteil-Dichtungsbereich mit zumindest einem Verankerungsbereich verbunden, der quer zur Erstreckungsrichtung des Formteil-Dichtungsbereichs verläuft. Bei Ausführung des erfindungsgemäßen Verfahrens bewirkt das Einbetten des zumindest einen Verankerungsbereichs in das Material des Formteils, dass auf das Dichtungselement eine nach innen gerichtete Abzugskraft ausübbar ist, der aufgrund der Formgebung und Anordnung des Verankerungsbereichs eine Gegenkraft entgegen wirkt. Vorteilhaft ist dabei, dass die Anlagefläche des Formteils an dem Dichtungselement weiter vergrößert ist. Ist weiterhin der Verankerungsbereich ausreichend elastisch, so wird das Dichtungselement in diesem Bereich bei der Schrumpfung durch das Material des Formteils verformt, d.h. der Verankerungsbereich folgt dem schrumpfenden Material. Dadurch ergibt sich in dem Verankerungsbereich ein besonders flüssigkeitsdichter Sitz. Kann der Verankerungsbereich dagegen bei der Schrumpfung dem Formteil-Material nicht folgen, bietet er einen Widerstand, der zu einem ebenfalls besonders flüssigkeitsdichten Presssitz führt.

Der Verankerungsbereich wird durch einen einen Materialbereich des Formteils hinterfassenden, gegen den Formteil-Dichtungsbereich abgewinkelt angeordneten Bereich des Dichtungselements gebildet. Bei einer weiteren Ausgestaltung weist der Formteil-Dichtungsbereich eine raue und/oder rippenartige Oberflächenstruktur auf, durch die der Verankerungsbereich gebildet ist. Insbesondere die Rippen erstrecken sich vorzugsweise in Umfangsrichtung des Dichtungselements.

Bei einer Weiterbildung des erfindungsgemäßen Verfahrens greift ein Kalibrierkörper zumindest während eines Teils des Verfestigungsprozesses in die Anschlussöffnung des Formteils ein und liegt dabei an der Innenseite am Dichtungselement an, um eine vordefinierte Position, Ausrichtung und/oder Bemaßung der Flüssigkeitsdichtung und/oder einen Schutz des Dichtungselements vor aggressiven Stoffen zu gewährleisten. Die Verwendung eines Kalibrierkörpers hat weiterhin den Effekt, dass zumindest stellenweise die Bildung eines Belages an der innenseitigen Oberfläche des Dichtungselements vermieden wird. Derartige Beläge oder Verschmutzungen können zu Undichtigkeiten zwischen dem Dichtungselement und einer Anschlussleitung führen. Der Kalibrierkörper bewirkt eine Fixierung des Dichtungselements und beugt daher einer Verformung des Dichtungselements bei der Schrumpfung vor. Auf diese Weise sind daher hohe Anforderungen an die Genauigkeit und Reproduzierbarkeit hinsichtlich der Bemaßung der Flüssigkeitsdichtung erfüllbar.

Vorzugsweise liegt der Kalibrierkörper unter geringfügiger Dehnung des aus elastischem Material gebildeten Dichtungselements an der Innenseite des Dichtungselements an.

Das Dichtungselement ist also auf dem Kalibrierkörper aufgespannt und somit besonders wirksam fixiert.

Weist der Anschlußleitungs-Dichtungsbereich des Dichtungselements einen sich in und/oder entgegen der Durchströmungsrichtung erweiternde Öffnungsweite auf, liegt der Kalibrierkörper vorzugsweise zumindest in zwei Bereichen mit unterschiedlichen Öffnungsweiten an der Innenseite des Dichtungselements an. Durch derartige Abstützungen des Dichtungselements kann somit in verschiedenen Bereichen eine Verformung vermieden werden und das vorgegebene Öffnungsweitenprofil erhalten werden. Außerdem ist auf diese Weise eine großflächige Abdeckung des Innenrandes des Dichtungselements erzielbar.

Bei einer Weiterbildung greift ein zweiter Kalibrierkörper von der anderen Öffnungsseite als der erste Kalibrierkörper in die Ringöffnung bzw. die Anschlußöffnung ein. Selbst bei komplizierten Öffnungsweite-Profilen des Dichtungselements, beispielsweise in der Art einer Labyrinth-Dichtung, kann somit ein wirksamer Schutz und/oder eine wirksame Fixierung des Dichtungselements erzielt werden. Bevorzugtermaßen greifen der erste und der zweite Kalibrierkörper ineinander ein. Dies führt zu einer gegenseitigen Fixierung und Stützung, so daß die Relativposition der beiden Kalibrierkörper definiert ist und während des gesamten Verfestigungsprozesses unverändert beibehalten werden kann.

Das erfindungsgemäße Dichtungselement weist vorzugsweise an der Innenseite des Anschlußleitungs-Dichtungsbereichs eine geschlossene umlaufende Dichtungslippe auf. Dies hat den Vorteil, daß selbst bei einer Verformung des Dichtungselements noch ein rundum dichter Sitz zwischen dem Dichtungselement und einer Anschlußleitung erzielbar ist.

Bevorzugtermaßen weist die Dichtungslippe einen Innenrand zur dichtenden Anlage an der Anschlußleitung auf, wobei der Innenrand in Durchströmungsrichtung gesehen weiter strömungsaufwärts liegt als der außenseitige Ansatz der Dichtungslippe. Befindet sich bei dieser Weiterbildung Flüssigkeit an der strömungsaufwärts liegenden Seite der Dichtungslippe, wird mit zunehmendem Flüssigkeitsdruck eine wachsende Anreßkraft auf die Dichtungslippe ausgeübt, so daß die Dichtungswirkung gewährleistet ist.

Bei einer Weiterbildung des erfindungsgemäßen Dichtungselements hat die Anschlußleitungs-Dichtungsbereich eine sich in Durchströmungsrichtung zunächst verjüngende und wieder erweiternde Öffnungsweite, so daß eine linienartige geschlossen umlaufende Anlagefläche zur dichtenden Anlage an der Anschlußleitung gebildet ist. Wird eine Anschlußleitung in die Ringöffnung des Dichtungselements eingebracht, wobei die Außenweite, insbesondere der Außendurchmesser der Anschlußleitung größer ist als die Innenweite an der linienartigen Anlagefläche, so wird ein Preßsitz mit guter Dichtwirkung zwischen der Anschlußleitung und dem Dichtungselement ausgebildet.

Bei noch einer Weiterbildung des Dichtungselements weist der Anschlußleitungs-Dichtungsbereich einen Abschnitt auf, der sich bei etwa gleichbleibender Öffnungsweite in Durchströmungsrichtung erstreckt, so daß ein flächiger flüssigkeitsdichtender Sitz mit der Anschlußleitung bildbar ist.

Die vorstehend beschriebenen Gestaltungsmerkmale des Anschlußleitungs-Dichtungsbereichs können einzeln oder in Kombination miteinander verwirklicht werden. Bei einer bevorzugten Ausführungsform ist sowohl eine linienartige geschlossen umlaufende Anlagefläche, als auch eine Dichtungslippe und außerdem auch eine Anlagefläche über einen Abschnitt gleichbleibender Öffnungsweite vorhanden. Es entsteht somit eine labyrinthartige Dichtung, die die Vorteile von Lippendichtungen und Preßsitzdichtungen miteinander vereint.

Die Erfindung wird nun anhand von Ausführungsbeispielen näher erläutert. Dabei wird Bezug auf die beigefügte Zeichnung genommen. Die Erfindung ist jedoch nicht auf diese Ausführungsbeispiele beschränkt. Die einzelnen Figuren der Zeichnung zeigen:
- Fig. 1:: einen halbseitigen Längsschnitt durch ein Dichtungselement und
- Fig. 2:: einen halbseitigen Längsschnitt durch eine Anordnung während der Herstellung einer Flüssigkeitsdichtung.

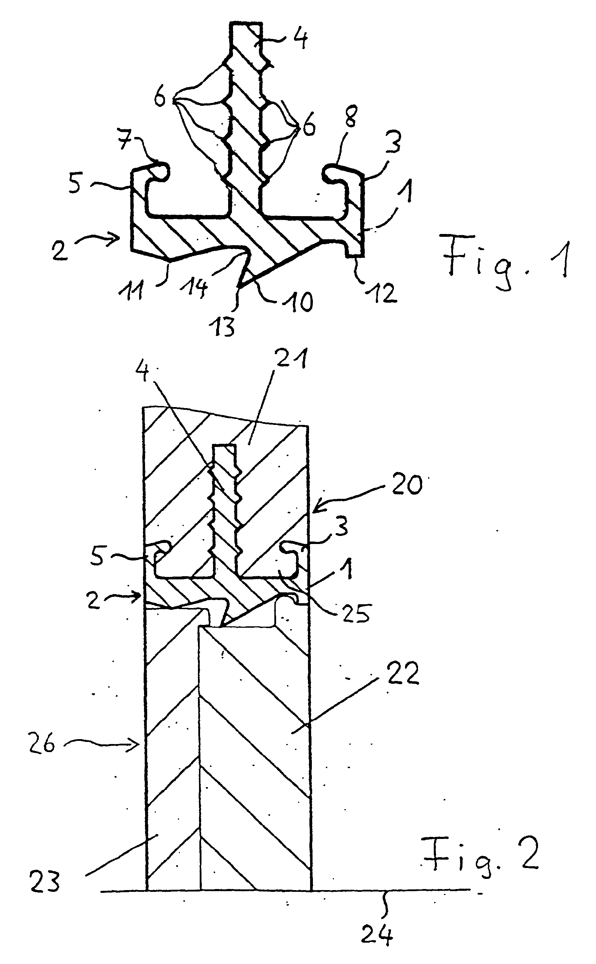

Fig. 1 zeigt einen Längsschnitt durch ein Dichtungselement 1. Das Dichtungselement 1 ist rotationssymmetrisch zu einer Rotationsachse, die unterhalb der in der Figur gezeigten Umrisse des Dichtungselements 1 in der Bildebene der Figur liegt. Die Rotationsachse ist in Fig. 1 nicht dargestellt.

Das Dichtungselement 1 weist einen Anschlußleitungs-Dichtungsbereich 2 auf. Der Anschlußleitungs-Dichtungsbereich 2 weist in der Darstellung der Figur an seiner Unterseite, die die Innenseite der durch das Dichtungselement 1 definierten Ringöffnung ist, ein labyrinthartiges Dichtungsprofil auf. Unmittelbar an dem auslaufseitigen Ende der Ringöffnung befindet sich innenseitig eine zylindrische Anlagefläche 12, die bei Anlage an eine in die Ringöffnung eingesteckte Anschlußleitung einen flüssigkeitsdichten Sitz bildet, falls die Anschlußleitung einen entsprechenden Außendurchmesser aufweist. Das Dichtungselement besteht aus an sich bekannten elastischen Materialien, insbesondere aus Acrylnitril-Butadien-Kautschuk (NBR). Wird daher eine Anschlußleitung, die einen geringfügig größeren Außendurchmesser hat als der Innendurchmesser des Dichtungselements 1 an der Anlagefläche 12, in die Ringöffnung eingebracht, wird der flüssigkeitsdichte Sitz aufgrund der Rückstellkräfte des elastischen Dichtungsmaterials bewirkt.

Etwa in der Mitte des Anschlußleitungs-Dichtungsbereichs 2 befindet sich innenseitig eine Dichtungslippe 10, deren Lippeninnenrand 13 eine deutlich geringere Öffnungsweite aufweist als die zylindrische Anlagefläche 12. Der Lippenansatz 14 befindet sich in Strömungsrichtung gesehen (d. h. in der Darstellung der Figur 1 von links nach rechts gesehen) weiter strömungsabwärts als der Lippeninnenrand 13.

Wird eine Anschlußleitung von rechts in die Ringöffnung eingeführt und nach Einpassen in die zylindrische Anlagefläche 12 weiter in die Ringöffnung hineingesteckt, dann legt sich die Dichtungslippe 10 unter Erweiterung ihrer Öffnungsweite mit ihrer Innenseite (in der Figur 1 am Lippeninnenrand 13 beginnend und nach rechts oben ansteigend) an die Anschlußleitung. Die Dichtungslippe 10 bewirkt somit eine wirksame Flüssigkeitsdichtung, die selbst bei hohen Flüssigkeitsdrücken beständig ist und bewirkt durch ihre "Zahnform" einen erhöhten Widerstand gegenüber einem Herausziehen einer einmal eingesteckten Anschlußleitung.

Noch weiter strömungsaufwärts gelegen befindet sich an der Innenseite des Anschlußleitungs-Dichtungsbereichs 2 ein Abschnitt, in dem die Öffnungsweite zunächst abnimmt und dann wieder zunimmt, so daß eine linienartige Anlagefläche 11 gebildet ist. Im entspannten Zustand des Anschlußleitungs-Dichtungsbereichs 2, d. h. wenn keine Anschlußleitung angeschlossen ist, ist die Öffnungsweite der linienartigen Anlagefläche 11 geringer als die Öffnungsweite der zylindrischen Anlagefläche 12. Wird daher die Anschlußleitung von rechts kommend über die Dichtungslippe 10 hinaus weiter in die Ringöffnung hineingesteckt, resultiert ein Preßsitz zwischen der linienartigen Anlagefläche 11 und der Anschlußleitung mit zumindest in einem schmalen Abschnitt größeren Preßdrücken zwischen Dichtungselement 1 und Anschlußleitung als an der zylindrischen Anlagefläche 12.

Ist die Anschlußleitung, wie vorstehend beschrieben, so weit in die Ringöffnung hineingesteckt, bildet das Dichtungselement 1 eine labyrinthartige Dichtung, die die bekannten Vorteile von Preßsitzdichtungen und Lippendichtungen kombiniert und darüber hinaus noch einen zusätzlichen Dichtungseffekt durch das Vorhandensein mehrerer, voneinander beabstandeter Anlageflächen zeigt.

Unter Bezugnahme sowohl auf Fig. 1 als auch auf Fig. 2 wird nun beschrieben, wie das Dichtungselement 1 einen flüssigkeitsdichten Sitz mit einem in einem Verfestigungsprozeß hergestellten Formteil bildet. In Fig. 2 ist ein Detail eines Formteils 21 aus Polymerbeton dargestellt. Das Formteil 21 ist beispielsweise eine Entwässerungsrinne zur Entwässerung von Bodenflächen, ein Einlaufkasten oder dergleichen Entwässerungseinrichtung. Um Wasser oder andere Flüssigkeiten aus dem Formteil ableiten zu können, weist das Formteil 21 in dem in Fig. 2 dargestellten Bereich eine Anschlußöffnung auf, die nur halbseitig im Querschnitt dargestellt ist. Die in Fig. 2 dargestellte Anordnung ist rotationssymmetrisch zu der Rotationsachse 24. Die durch das Formteil 21 definierte Anschlußöffnung ist somit kreisförmig.

Das Dichtungselement 1 weist zusätzlich zu dem Anschlußleitungs-Dichtungsbereich 2 insgesamt drei Formteil-Dichtungsbereiche 3, 4, 5 auf. Der erste Formteil-Dichtungsbereich 3 befindet sich am auslaufseitigen Ende der Anschlußöffnung. Der erste Formteil-Dichtungsbereich 3 erstreckt sich im wesentlichen senkrecht zur Durchströmungsrichtung der Ringöffnung bzw. der Anschlußöffnung und setzt unmittelbar an dem Anschlußleitungs-Dichtungsbereich 2 an. An seiner linken, in Strömungsrichtung weiter stromaufwärts gelegenen Seite liegt das Material des Formteils 21 an dem ersten Formteil-Dichtungsbereich an.

An dem außenseitigen, in der Darstellung von Fig. 2 bzw. Fig. 1 oben liegenden Ende des ersten Formteil-Dichtungsbereichs befindet sich ein auslaufseitiger Verankerungsbereich 8, der quer zur Erstreckungsrichtung des ersten Formteil-Dichtungsbereichs 3 verläuft. Durch den auslaufseitigen Verankerungsbereich 8 ist das Dichtungselement 1 fest in dem Material des Formteils 21 verankert. Radial einwärts in die Ringöffnung hineinweisende Abzugskräfte, die beispielsweise beim Einstecken einer Anschlußleitung in die Ringöffnung auftreten, können von dem Formteil 21 aufgenommen werden, ohne daß ein Lockern der Verankerung oder gar ein Ausbrechen des Dichtungselements 1 auftritt. Die Verankerung wird noch durch das wulstartige, sich erweiternde Ende des auslaufseitigen Verankerungsbereichs 8 verstärkt.

Weiterhin ist der auslaufseitige Verankerungsbereich 8 derart elastisch, daß er bei der Herstellung der durch das Formteil 21 und das Dichtungselement 1 gebildeten Flüssigkeitsdichtung 20 einer durch Schrumpfung des Polymerbeton bedingten Bewegung radial einwärts in Richtung der Rotationsachse 24 folgen kann. Zumindest in diesen Bereichen des Dichtungselements 1 bleibt daher das Polymerbeton-Material während des Schrumpfungsprozesses in Kontakt mit denselben Stellen an der Oberfläche des Dichtungselements 1, so daß eine besonders feste Anlage und damit ein wirksamer flüssigkeitsdichter Sitz gebildet ist.

Der dritte Formteil-Dichtungsbereich 5, der sich am einlaufseitigen Ende der Anschlußöffnung befindet, weist an seinem in radialer Richtung gesehen auswärtigen Ende einen einlaufseitigen Verankerungsbereich 7 auf. Die Anordnung der Verankerungsbereiche 7, 8 ist spiegelbildlich zueinander bezüglich einer Spiegelebene, die eine mittige Querschnittsebene der Anschlußöffnung bzw. Ringöffnung ist.

Weiterhin weist das Dichtungselement 1 noch einen zweiten Formteil-Dichtungsbereich 4 auf, der einen stegartigen Längsschnitt in der Darstellung der Figuren 1 und 2 zeigt und daher insgesamt scheibenringförmig ausgestaltet ist. Der zweite Formteil-Dichtungsbereich 4 setzt unmittelbar an dem Anschlußleitungs-Dichtungsbereich 2 an und erstreckt sich in radialer Richtung um ein mehrfaches der radialen Erstreckung des Anschlußleitungs-Dichtungsbereichs in das Material des Formteils 21 hinein. Er ist beidseitig, in der Darstellung von Fig. 2 rechts und links, von dem Material des Formteils 21 umgeben. Der zweite Formteil-Dichtungsbereich 4 weist eine rippenartige Oberflächenstruktur auf, wobei an jeder der beiden Seiten vier Ringrippen 6 angeordnet sind. Jede der Ringrippen 6 umläuft in sich geschlossen die gesamte Ringöffnung. Die Ringrippen 6 gewährleisten einerseits eine sichere Verankerung des zweiten Formteil-Dichtungsbereichs 4 in dem Formteil 21 und bilden andererseits im wesentlichen ortsfeste Strukturen, die beim Schrumpfungsvorgang des Polymerbetons diesem einen Widerstand bieten. Insbesondere an den Oberseiten, das heißt den radial auswärts liegenden Seiten der Ringrippen 6 kommt es daher während der Schrumpfung zum Anpressen des Polymerbeton-Materials und damit zu einer besonders zuverlässig dichtenden Anlage. Unter Umständen können sogar Hohlräume zwischen dem Polymerbeton und den Ringrippen 6 noch während des Verfestigungsprozesses ausgefüllt werden. Ein ähnlicher Effekt zeigt sich an dem in radialer Richtung gesehen außen liegenden Rand des zweiten Formteil-Dichtungsbereichs 4, der insgesamt eine zylindrische Fläche bildet.

Im folgenden wird nun ein Ausführungsbeispiel des erfindungsgemäßen Verfahren zum Herstellen einer Flüssigkeitsdichtung näher beschrieben. Das Dichtungselement 1 wird während des Herstellungsprozesses, in dem das Formteil 21 seine Form erhält, in folgender Weise mit dem Formteil 21 verbunden. In Fig. 2 sind ein erster 22 und ein zweiter 23 Kalibrierkörper dargestellt, auf die das Dichtungselement 1 während des Gießens und des nachfolgenden Verfestigungsprozesses, der zum Aushärten des Polymerbeton führt, unter geringfügiger lokaler Dehnung aufgespannt ist. Die Kalibrierkörper 22, 23 greifen dabei an der Innenseite der Ringöffnung des Dichtungselements 1 an diesem an. Die Dehnung des Dichtungselements ist dabei deutlich geringer als die durch eine Anschlußleitung bewirkte Dehnung, welche nach dem Aushärten wie bereits beschrieben in die Ringöffnung eingesteckt wird. Die durch die Kalibrierkörper 22, 23 bewirkte Dehnung bringt jedoch den Vorteil mit sich, daß das Dichtungselement 1 sicher ortsfest positioniert ist und bei der Schrumpfung des Polymerbetons auftretende Kräfte einwärts in Richtung der Ringöffnung zumindest stellenweise durch die Kalibrierkörper 22, 23 aufgenommen werden können. Es ist somit möglich, definierte Innenmaße der herzustellenden Flüssigkeitsdichtung 20 zu gewährleisten und bestehende Normen in puncto Maßhaltigkeit zu erfüllen. Da die Kalibrierkörper 22, 23 rundherum an der Innenseite des Dichtungselements 1 anliegen, wird eine Verformung der Ringöffnung verhindert.

Durch die Ausbildung der Rippenform im eingegossenen Bereich der Dichtung wird ebenfalls ein Labyrinth abgebildet, welches verhindern soll, daß Flüssigkeit zwischen Dichtung und Polymerbeton von der einen Seite zur anderen Seite durchdringen kann. Durch die Verlängerung der Fließwege ist somit sichergestellt, daß bei auftretenden Inhomogenitäten im Polymerbeton keine Flüssigkeit durchdringen kann.

Die vorstehend beschriebene Flüssigkeitsdichtung 20 erfüllt bei geeigneter Kalibrierung mittels der Kalibrierkörper 22, 23 die Anforderung in puncto Maßhaltigkeit der DIN 19534 T1 (Steckmuffe mit Dichtung), in puncto Dichtigkeit auch bei hydraulischem Druck, KIWA-WRL 5211 und, bei Verlegung im Erdreich, in puncto Dichtigkeit der DIN 4060 (Wasserdichtigkeit von Rohrverbindungen). Die Ausgestaltung des Dichtungselements 1 mit einer Mehrzahl von umlaufenden Anlageflächen zur Anlage an eine in die Ringöffnung eingebrachten Anschlußleitung hat weiterhin den Vorteil, daß eine Dichtigkeit auch dann gewährleistet ist, wenn die Anschlußleitung nicht genau koaxial in die Ringöffnung eingebracht wird oder nach dem Einbringen quer zur Rotationsachse 24 wirkenden Kräften ausgesetzt ist. Insbesondere die Dichtungslippe 10 gleicht Asymmetrien aus. Die Anordnung der auf dem Preßsitz-Dichtungsprinzip basierenden linienartigen Anlagefläche 11 und der zylindrischen Anlagefläche 12 in der Nähe der Enden der Ringöffnung gewährleistet eine exakte Positionierung der Anschlußleitung und verhindert größere Abweichungen von der koaxialen Position.

## Patentansprüche

1. Verfahren zum Herstellen einer Flüssigkeitsdichtung (20) zum flüssigkeitsdichten Anschluss einer Anschlussleitung an ein in einem Verfestigungsprozess hergestelltes Formteil (21), insbesondere aus Polymerbeton, welches zur Führung und/oder Aufnahme von Flüssigkeiten ausgebildet ist, insbesondere an eine Entwässerungsrinne einen Einlaufkasten oder dergleichen Entwässerungseinrichtung,
wobei
- an dem Formteil (21) eine Anschlussöffnung mit einem in sich geschlossen umlaufenden Öffnungsrand (25) ausgebildet wird und
- ein ringartiges Dichtungselement (1) vor dem Aushärten des Öffnungsrandes (25) an diesem angeordnet wird, insbesondere bei einem Gießvorgang miteingegossen wird, wobei
das Dichtungselement (1) einen Anschlussleitungs-Dichtungsbereich (2) aufweist, zur Bildung eines flüssigkeitsdichten Sitzes zwischen dem Dichtungselement (1) und der Anschlussleitung, welche in die durch das Dichtungselement (1) definierte Ringöffnung (26) einbringbar ist, wobei das Dichtungselement (1) mit einem sich quer zur Durchströmungsrichtung der Anschlussöffnung erstreckenden Formteil-Dichtungsbereich (3, 4, 5) ausgestaltet wird, der an der Außenseite des Anschlussleitungs-Dichtungsbereichs in Umfangsrichtung des Dichtungselements (1) verläuft, und wobei der Formteil-Dichtungsbereich (3, 4, 5) derart angeordnet wird, dass sich beim Aushärten des Formteils (21) ein flüssigkeitsdichter Sitz zwischen dem Formteil (21) und dem Formteil-Dichtungsbereich (3, 4, 5) bildet, wobei das Dichtungselement (1) zumindest einen an dem Formteil-Dichtungsbereich (3, 4, 5) ansetzenden Verankerungsbereich aufweist, der derart in dem Material des Formteils (21) angeordnet wird, dass nach dem Aushärten eine quer zur Durchströmungsrichtung, nach innen gerichtete Abzugskraft auf das Dichtungselement (1) ausübbar ist, der aufgrund der Formgebung und Anordnung des Verankerungsbereichs eine Gegenkraft entgegenwirkt,
**dadurch gekennzeichnet, dass**
der Verankerungsbereich durch einen einen Materialbereich des Formteils (21) hinterfassenden, gegen den Formteil-Dichtungsbereich (3, 5) abgewinkelt angeordneten Bereich mit wulstartig, sich erweiternden Enden (7, 8) gebildet wird.

2. Verfahren nach Anspruch 1,
**dadurch gekennzeichnet, dass**
der Verankerungsbereich eine rauhe und/oder rippenartige Oberflächenstruktur (6) des Formteil-Dichtungsbereichs (4) umfasst.

3. Verfahren nach einem der Ansprüche 1 oder 2,
**dadurch gekennzeichnet, dass**
zumindest während eines Teils des Verfestigungsprozesses mindestens ein Kalibrierkörper (22, 23) in die Anschlussöffnung eingreift und dabei an der Innenseite am Dichtungselement (1) anliegt.

4. Verfahren nach Anspruch 3,
**dadurch gekennzeichnet, dass**
der Kalibrierkörper (22, 23) unter Dehnung des aus elastischem Material gebildeten Dichtungselements (1) an der Innenseite anliegt.

5. Verfahren nach Anspruch 3 oder 4,
wobei der Anschlussleitungs-Dichtungsbereich (2) eine sich in und/oder entgegen der Durchströmungsrichtung erweiternde Öffnungsweite hat,
**dadurch gekennzeichnet, dass**
der Kalibrierkörper (22) zumindest in zwei Bereichen mit unterschiedlichen Öffnungsweiten an der Innenseite des Dichtungselement (1) anliegt.

6. Verfahren nach einem der Ansprüche 3 bis 5,
**dadurch gekennzeichnet, dass**
ein zweiter Kalibrierkörper (23) von der anderen Öffnungsseite als der erste Kalibrierkörper (22) in die Anschlussöffnung eingreift.

7. Verfahren nach Anspruch 6,
**dadurch gekennzeichnet, dass**
der erste (22) und der zweite (23) Kalibrierkörpcr ineinander eingreifen.

8. Ringartiges Dichtungselement (1) für eine Flüssigkeitsdichtung (20) zum flüssigkeitsdichten Anschluss einer Anschlussleitung an ein in einem Verfestigungsprozess hergestelltes Formteil (21), insbesondere aus Polymerbeton, mit
einem Anschlussleitungs-Dichtungsbereich (2) zur Bildung eines flüssigkeitsdichten Sitzes zwischen dem Dichtungselement (1) und der Anschlussleitung, welche in die durch das Dichtungselement (1) definierte Ringöffnung (26) einbringbar ist, wobei das Dichtungselement (1) zumindest einen an der Außenseite des Anschlussleitungs-Dichtungsbereiches (2) angeordneten Formteil-Dichtungsbereich (3, 4, 5) aufweist, der sich quer zur durch die Ringöffnung (26) definierten Durchströmungsrichtung erstreckt und der in Umfangsrichtung des Dichtungselements verläuft, wobei
der Formteil-Dichtungsbereich (3, 4, 5) sich ungefähr senkrecht zur Durchströmungsrichtung erstreckt und mit zumindest einem Verankerungsbereich (6, 7, 8) verbunden ist, der quer zur Erstreckungsrichtung des Formteil-Dichtungsbereich (3, 4, 5) verläuft, wobei
der Verankerungsbereich durch einen einen Materialbereich des Formteils (21) hinterfassenden, gegen den Formteil-Dichtungsbereich (3, 5) abgewinkelt angeordneten Bereich mit wulstartig, sich erweiternden Enden (7, 8) gebildet wird,
**dadurch gekennzeichnet, dass**
der Formteil-Dichtungsbereich einen ersten auslaufseitigen Formteil-Dichtungsbereich (3) und einen dritten einlaufseitigen Formteil-Dichtungsbereich (5) umfasst, die mit dem Verankerungsbereich mit den wulstartig, sich erweiternden Enden (7, 8) verbunden sind, und wenigstens einen dazwischen gelegenen weiteren Formteil-Dichtungsbereich (4) mit Verankerungsbereichen (6) umfasst, der beiderseitig von einem Materialbereich des Formteils (21) umgeben ist.

9. Dichtungselement nach Anspruch 8,
**dadurch gekennzeichnet, dass**
die Oberfläche des Formteil-Dichtungsbereichs (4) eine rippenartige Struktur aufweist, wobei die rippenartige Erhebung oder die rippenartigen Erhebungen (6) sich zumindest teilweise um den Öffnungsrand herum erstreckt bzw. erstrecken.

10. Dichtungselement nach einem der Ansprüche 8 oder 9,
**dadurch gekennzeichnet, dass**
der Anschlussleitungs-Dichtungsbereich (2) innenseitig eine geschlossen umlaufende Dichtungslippe (10) aufweist.

11. Dichtungselement nach Anspruch 10,
**dadurch gekennzeichnet, dass**
die Dichtungslippe (10) einen Innenrand (13) zur dichtenden Anlage an der Anschlussleitung aufweist, wobei der Innenrand (13) in Durchströmungsrichtung gesehen weiter strömungsaufwärts liegt als der außenseitige Ansatz (14) der Dichtungslippe (10).

12. Dichtungselement nach einem der Ansprüche 8 bis 11,
**dadurch gekennzeichnet, dass**
der Anschlussleitungs-Dichtungsbereich (2) eine sich in Durchströmungsrichtung zunächst verjüngende und wieder erweiternde Öffnungsweite hat, so dass eine linienartige geschlossen umlaufende Anlagefläche (11) zur dichtenden Anlage an der Anschlussleitung gebildet ist.

13. Dichtungselement nach einem der Ansprüche 8 bis 12,
**dadurch gekennzeichnet, dass**
der Anschlussleitungs-Dichtungsbereich (2) einen Abschnitt aufweist, der sich bei etwa gleichbleibender Öffnungsweite in Durchströmungsrichtung erstreckt, so dass ein flächiger flüssigkeitsdichtender Sitz mit der Anschlussleitung bildbar ist.

14. Dichtungselement nach einem der Ansprüche 8 bis 13,
**dadurch gekennzeichnet, dass**
das Dichtungselement (1) im Wesentlichen rotationssymmetrisch ausgestaltet ist.

## Claims

1. Method of producing a gasket (20) to form a fluid-tight connection of a connecting conduit to a moulded part (21) produced in a consolidation process, in particular made of concrete polymer, which is designed for guiding and/or receiving liquids, in particular to a drainage channel, an inlet chamber or a similar drainage device,
wherein
- at the moulded part (21) a connection opening is formed, with an uninterrupted circumferential opening edge (25), and
- a ring-like sealing element (1) is disposed thereon prior to hardening of the opening edge (25), in particular is poured in therewith during a casting process, such that
the sealing element (1) comprises a connecting-conduit sealing region (2) to form a fluid-tight seating between the sealing element (1) and the connecting conduit, which can be inserted into the ring-shaped opening (26) defined by the sealing element (1), and such that the sealing element (1) also comprises a moulded-part sealing region (3, 4, 5) that extends in a direction transverse to the direction of flow through the connection opening and passes along the outer side of the connecting-conduit sealing region in the circumferential direction of the sealing element (1), the moulded-part sealing region (3, 4, 5) being arranged in such a way that during hardening of the moulded part (21) a fluid-tight seating is formed between the moulded part (21) and the moulded-part sealing region (3, 4, 5), and such that the sealing element (1) comprises at least one anchoring region that is joined to the moulded-part sealing region (3, 4, 5) and is disposed in the material of the moulded part (21) so that after the hardening process an inwardly directed pulling force, i.e. transverse to the direction of flow, can be exerted on the sealing element (1) and be counteracted by an opposing force because of the shape and disposition of the anchoring region,
**characterised in that**
the anchoring region is formed by a region that grips into some of the material of the moulded part (21), is set at an angle to the moulded-part sealing region (3, 5) and has expanded, rounded ends (7, 8).

2. Method according to Claim 1,
**characterised in that** the anchoring region has a rough and/or rib-like surface structure (6) in the moulded-part sealing region (4).

3. Method according to one of the claims 1 or 2,
**characterised in that** at least during part of the consolidation process at least one calibration body (22, 23) engages the connection opening, thereby being apposed to the sealing element (1) on its inner side.

4. Method according to Claim 3,
**characterised in that** the calibration body (22, 23) is apposed to the inner side while stretching the sealing element (1), which is made of elastic material.

5. Method according to Claim 3 or 4,
wherein the connecting-conduit sealing region (2) has an opening width that expands in and/or against the direction of flow through the conduit,
**characterised in that** the calibration body (22, 23) is apposed to the inner side of the sealing element (1) in at least two regions with different opening widths.

6. Method according to one of the claims 3 to 5,
**characterised in that** a second calibration body (23) is inserted into the connection opening on the side opposite to the first calibration body (22).

7. Method according to Claim 6,
**characterised in that** the first(22) and the second (23) calibration bodies engage one another.

8. Ring-shaped sealing element (1) for a gasket (20) to form a fluid-tight connection of a connecting conduit to a moulded part (21) produced in a consolidation process, in particular made of concrete polymer, with
a connecting-conduit sealing region (2) to form a fluid-tight seating between the sealing element (1) and the connecting conduit, which can be inserted into the ring-shaped opening (26) defined by the sealing element (1), such that the sealing element (1) comprises at least one moulded-part sealing region (3, 4, 5) that is disposed on the outer side of the connecting-conduit sealing region (2), extends in a direction transverse to the direction of flow defined by the ring-shaped opening (26) and runs in the circumferential direction of the sealing element, wherein
the moulded-part sealing region (3, 4, 5) extends approximately perpendicular to the direction of flow and is connected to at least one anchoring region (6, 7, 8) that runs transverse to the direction in which the moulded-part sealing region (3, 4, 5) extends, such that the anchoring region is formed by a region that grips into some of the material of the moulded part (21), is set at an angle to the moulded-part sealing region (3, 5) and has expanded, rounded ends (7, 8),
**characterised in that**
the moulded-part sealing region comprises on the outflow side a first moulded-part sealing region (3) and on the inflow side a third moulded-part sealing region (5), which are connected to the expanded, rounded ends (7, 8), and at least one additional moulded-part sealing region (4) positioned between the first and third and having anchoring regions (6), which is enclosed on both sides by a region of the material of the moulded part (21).

9. Sealing element according to Claim 8,
**characterised in that** the surface of the moulded-part sealing region (4) has a rib-like structure, such that the rib-like elevation or elevations (6) extends/extend at least partly around the opening edge.

10. Sealing element according to one of the claims 8 or 9,
**characterised in that** the connecting-conduit sealing region (2) comprises on its inner side a sealing lip (10) that runs continuously around it.

11. Sealing element according to Claim 10,
**characterised in that** the sealing lip (10) comprises an inner edge (13) to be apposed to the connecting conduit so as to form a seal, such that the inner edge (13) is positioned further upstream, in the direction of flow through the conduit, than the outer base (14) of the sealing lip (10).

12. Sealing element according to one of the claims 8 to 11,
**characterised in that** the connecting-conduit sealing region (2) has an opening width that in the direction of flow initially becomes narrower and then expands again, so that a contact surface (11) in the form of a closed circumferential line is formed for sealing apposition to the connecting conduit.

13. Sealing element according to one of the claims 8 to 12,
**characterised in that** the connecting-conduit sealing region (2) comprises a section that extends in the flow direction with an opening width that remains approximately the same, so that a flat seating on the connecting conduit can be formed to create a fluid-tight seal.

14. Sealing element according to one of the claims 8 to 13,
**characterised in that** the sealing element (1) is constructed so as to be substantially rotationally symmetric.

## Revendications

1. Procédé de fabrication d'un joint étanche aux liquides (20) pour le raccord étanche aux liquides d'une conduite de raccordement à une pièce moulée (21) fabriquée par un processus d'injection, notamment en béton polymère formé pour la conduction et/ou la collecte de liquides, en particulier sur un caniveau de drainage d'un bac d'admission ou d'un dispositif de drainage similaire,
- une ouverture de raccord avec un bord d'ouverture (25) périphérique et refermé sur soi étant formée sur la pièce moulée (21), et
- un élément d'étanchéité (1) annulaire étant disposé sur le bord d'ouverture (25) avant le durcissement de celui-ci, et est notamment coulé conjointement lors d'un processus de coulée,
l'élément d'étanchéité (1) présentant une zone de joint de conduite de raccordement (2) pour la formation d'un ajustement étanche aux liquides entre l'élément d'étanchéité (1) et la conduite de raccordement, laquelle est applicable dans l'ouverture annulaire (26) définie par l'élément d'étanchéité (1), ledit élément d'étanchéité (1) étant formé avec une zone de joint de pièce moulée (3, 4, 5) transversale à l'ouverture d'écoulement de l'ouverture de raccord, laquelle s'étend sur la face extérieure de la zone de joint de conduite de raccordement dans le sens circonférentiel de l'élément d'étanchéité (1), et ladite zone de joint de pièce moulée (3, 4, 5) étant disposée de manière à former un ajustement étanche aux liquides entre la pièce moulée (21) et la zone de joint de pièce moulée (3, 4, 5) lors du durcissement de la pièce moulée (21), l'élément de joint (1) présentant une zone d'ancrage au moins applicable sur la zone de joint de pièce moulée (3, 4, 5), laquelle est disposée dans la matière de la pièce moulée (21) de manière qu'après durcissement, un effort de traction transversal au sens de l'écoulement, dirigé vers l'intérieur est exerçable sur l'élément de joint (1) qui exerce une force opposée du fait de la forme et de la disposition de la zone d'ancrage,
**caractérisé en ce que**
la zone d'ancrage est formée par une zone de saisie d'une dépouille arrière de la matière de la pièce moulée (21), disposée en équerre contre la zone de joint de pièce moulée (3, 5) avec des extrémités (7, 8) en extension en bourrelet.

2. Procédé selon la revendication 1,
**caractérisé en ce que**
la zone d'ancrage comprend une structure de surface (6) rugueuse et/ou nervurée entourant la zone de joint de pièce moulée (4).

3. Procédé selon l'une des revendications 1 ou 2,
**caractérisé en ce que**
pendant une partie au moins du processus d'injection, un corps de calibrage (22, 23) au moins est engagé dans l'ouverture de raccord en reposant contre la face intérieure de l'élément de joint (1).

4. Procédé selon la revendication 3,
**caractérisé en ce que**
le corps de calibrage (22, 23) repose contre la face intérieure par dilatation de l'élément de joint (1) formé en matériau élastique.

5. Procédé selon la revendication 3 ou 4,
o ù la zone de joint de conduite de raccordement (2) présente une largeur d'ouverture s'étendant dans et/ou contre le sens de l'écoulement,
**caractérisé en ce que**
le corps de calibrage (22) repose au moins dans deux zones de largeurs d'ouverture différentes sur la face intérieure de l'élément de joint (1).

6. Procédé selon l'une des revendications 3 à 5,
**caractérisé en ce**
**qu'**un deuxième corps de calibrage (23) est engagé dans l'ouverture de raccord depuis l'autre côté d'ouverture par rapport au premier corps de calibrage (22).

7. Procédé selon la revendication 6,
**caractérisé en ce que**
le premier (22) et le deuxième (23) corps de calibrage ont prise l'un dans l'autre.

8. Elément de joint annulaire (1) pour un joint étanche aux liquides (20) pour le raccord étanche aux liquides d'une conduite de raccordement à une pièce moulée (21) fabriquée par un processus d'injection, notamment en béton polymère, avec une zone de joint de conduite de raccordement (2) pour la formation d'un ajustement étanche aux liquides entre l'élément d'étanchéité (1) et la conduite de raccordement, laquelle est applicable dans l'ouverture annulaire (26) définie par l'élément d'étanchéité (1), ledit élément d'étanchéité (1) présentant une zone de joint de pièce moulée (3, 4, 5) au moins disposée sur la face extérieure de la zone de joint de conduite de raccordement (2), s'étendant transversalement au sens de l'écoulement défini par l'ouverture annulaire (26) dans le sens circonférentiel de l'élément d'étanchéité (1),
ladite zone de joint de pièce moulée (3, 4, 5) s'étendant à peu près perpendiculairement au sens de l'écoulement et est reliée à au moins une zone d'ancrage (6, 7, 8) transversale au sens d'extension de la zone de joint de pièce moulée (3, 4, 5),
la zone d'ancrage étant formée par une zone de matériau d'une dépouille arrière de la matière de la pièce moulée (21), disposée en équerre contre la zone de joint de pièce moulée (3, 5) avec des extrémités (7, 8) en extension en bourrelet,
**caractérisé en ce que**
la zone de joint de pièce moulée présente une première zone de joint de pièce moulée (3) côté sortie et une troisième zone de joint de pièce moulée (5) côté entrée, lesquelles sont reliées à la zone d'ancrage avec les extrémités (7, 8) en extension en bourrelet, et qui comprend une autre zone de joint de pièce moulée (4) au moins intercalée avec des zones d'ancrage (6), laquelle est entourée des deux côtés par une zone de matériau de la pièce moulée (21).

9. Elément de joint selon la revendication 8,
**caractérisé en ce que**
la surface de la zone de joint de pièce moulée (4) présente une structure nervurée, le relief en nervure ou les reliefs en nervure (6) s'étendant au moins partiellement autour du bord d'ouverture.

10. Elément de joint selon l'une des revendications 8 ou 9,
**caractérisé en ce que**
la zone de joint de la conduite de raccordement (2) présente sur sa face intérieure une lèvre d'étanchéité (10) circonférentielle fermée.

11. Elément de joint selon la revendication 10,
**caractérisé en ce que**
la lèvre d'étanchéité (10) présente un bord intérieur (13) pour un appui d'étanchéité contre la conduite de raccordement, ledit bord intérieur (13) étant situé relativement au sens de l'écoulement plus en amont que la saillie extérieure (14) de la lèvre d'étanchéité (10).

12. Elément de joint selon l'une des revendications 8 à 11,
**caractérisé en ce que**
la zone de joint de la conduite de raccordement (2) présente une largeur d'ouverture rétrécie avant de s'élargir à nouveau dans le sens de l'écoulement, de manière à former une surface d'appui (11) linéaire circonférentielle fermée pour un appui d'étanchéité contre la conduite de raccordement.

13. Elément de joint selon l'une des revendications 8 à 12,
**caractérisé en ce que**
la zone de joint de la conduite de raccordement (2) présente une section s'étendant avec une largeur d'ouverture à peu près constante dans le sens de l'écoulement, de manière à pouvoir former un ajustement plan étanche aux liquides avec la conduite de raccordement.

14. Elément de joint selon l'une des revendications 8 à 13,
**caractérisé en ce que**
l'élément de joint (1) est essentiellement à symétrie de révolution.
